# FASCICULE DE BREVET EUROPEEN

(11) **EP 0 377 350 B1**
(45) Date de publication et mention de la délivrance du brevet: **04.08.1993**
(21) Numéro de dépôt: 89403102.0
(22) Date de dépôt: 09.11.1989
(51) Int. Cl.: H04Q 11/04, H04M 11/06

(54) **Contrôleur de communication RNIS multiprotocoles**
Mehrfachprotokoll-ISDN-Übertragungssteuerung
Multi-protocol ISDN communication controller

(30) Priorité: 27.12.1988 FR 8817208
(43) Date de publication de la demande: 11.07.1990
(73) Titulaire: BULL S.A., 92800 Puteaux (FR)
(72) Inventeur: Abdelmouttalib, Najib, F-78700 Conflans-Sainte-Honorine (FR); Duflot, Didier, F-92130 Issy-les-Moulineaux (FR)
(74) Mandataire: Gouesmel, Daniel

(56) Documents cités:
- EP-A- 0 250 075
- EP-A- 0 280 171
- IEEE INTERNATIONAL CONFERENCE ON COMMUNICATIONS'86, Toronto, 22-25 juin 1986, vol. 2, pages 24.5.1-24.5.6, IEEE, New York, US; R. KUN: "A VLSI approach to supporting lapd in an ISDN exchange termination"
- IEEE JOURNAL ON SELECTED AREAS IN COMMUNICATIONS, vol. SAC-5, no. 8, octobre 1987, pages 1336-1345, IEEE, New York, US; H. ICHIKAWA et al.: "High-speed packet switching systems for multimedia communications"
- PROCEEDINGS OF THE 1987 IEEE INTERNATIONAL CONFERENCE ON COMPUTER DESIGN: VLSI IN COMPUTERS & PROCESSORS - ICCD'87, New York, 5-8 octobre 1987, pages 100-106, IEEE, New York, US; H.T. FRENCH et al.: "An eight channel synchronous data controller for a primary rate interface to ISDN"

## Description

La présente invention concerne un contrôleur de communications RNIS multiprotocoles. Elle est notamment utilisée dans les équipements terminaux de réseau de transmission de données où celles-ci sont acheminées par l'intermédiaire d'une liaison de communication de type S₂ définie par la norme européenne ECMA 104, chaque équipement terminal étant relié par l'intermédiaire de cette liaison à un autocommutateur téléphonique de type numérique.

On sait qu'un réseau de transmission de données est constitué par une pluralité d'unités, généralement appelées "Equipement Terminal de Traitement de Données", en abrégé, ETTD, (Data Terminal Equipment, en langue anglaise, en abrégé, DTE), ou encore terminaux ou stations par commodité de langage. Ces terminaux peuvent être constitués par des ordinateurs, ou encore, par tout type d'appareil téléphonique. Ces ETTD communiquent entre eux par l'intermédiaire d'un système ou ligne de transmission, constitué par exemple par deux paires de fils téléphoniques (l'une pour l'émission, l'autre pour la réception) ou encore un câble coaxial. La ligne de transmission relie physiquement les emplacements géographiques où se trouvent situés les terminaux.

Les réseaux locaux sont des réseaux de transmission limités à une enceinte limitée en surface (immeuble, établissement industriel, campus, hôpital) où les distances entre les différents terminaux sont de l'ordre de quelques mètres ou dizaines de mètres, à quelques kilomètres.

Les différentes stations ou terminaux d'un réseau émettent des messages d'informations et reçoivent ceux émis par les autres stations. Le message individuel est appelé trame d'information. Celle-ci est structurée, comporte un message de début et de fin, l'adresse du terminal auquel est destiné le message, l'adresse du terminal émetteur, la longueur des données, les données utiles, etc ... . En d'autres termes, la trame d'informations est le bloc élémentaire d'informations émises par un terminal quelconque qui transite sur la ligne de transmission.

Les règles d'accès aux différents terminaux qui régissent le dialogue entre ceux-ci définissent ce qui est communément appelé un protocole. Ce dernier constitue un système qui ordonnance la conversation entre les terminaux sans la hiérarchiser.

On connaît différents types de protocole (pour désigner un protocole, on utilise également le mot procédure). L'un des protocoles les plus utilisés est le protocole HDLC (de l'anglais High Level Data Link Control), normalisé selon l'avis X25 du CCITT (Comité Consultatif International Télégraphique Téléphonique), livre jaune, fascicule XIII.2, Novembre 1980, et selon les normes internationales définies par l'Organisation Internationale de la Normalisation, dite ISO, sous les désignations suivantes IS3309-2, IS4335, IS6159 et 6256.

Il existe également un protocole défini par la norme européenne ECMA 102 (ou encore par le CCITT, sous la désignation V110), qui tend à être utilisé de plus en plus couramment.

Un terminal comprend deux parties fonctionnelles essentielles, à savoir la source ou collecteur de données, d'une part, et le contrôleur de communication regroupant les organes chargés des fonctions de communication du terminal avec les autres terminaux, d'autre part. Ce dernier réalise en particulier la protection contre les erreurs de transmission des données et introduit des informations spéciales dites de service permettant d'assurer le dialogue entre les différents terminaux. Le contrôleur de communication peut, ou non, constituer un sous-ensemble physiquement dissociable des organes de traitement des informations proprement dits du terminal. Entre le contrôleur de communication et le support de transmission, on trouve généralement un équipement de terminaison de circuit de données ETCD, (Data Circuit Terminating Equipment, en abrégé, DCE, en anglais), qui est un organe chargé, en particulier, d'adapter le signal électrique délivré par le terminal aux supports de transmission. Cette fonction est dans la pratique courante réalisée par modulation-démodulation d'un signal auxiliaire porteur dans un équipement appelé "MODEM".

Les informations complètes échangées entre les différents terminaux le sont, le plus souvent, sous forme d'ensemble d'informations binaires (bits) codées.

De manière générale, les informations émises par la source de données le sont sous forme d'ensembles de huit bits, appelé octets, émis en parallèle, alors que ces mêmes octets sont transmis par la ligne de transmission en série. Le coupleur réalise donc la transformation des octets d'information parallèles en octets d'informations série. Par ailleurs, il a des fonctions de multiplexage, c'est-à-dire qu'il est destiné à transmettre plusieurs communications différentes en série sur une même ligne de transmission.

La tendance du développement technologique des réseaux, avec l'apparition et le développement rapide de l'utilisation de miniordinateurs a conduit à utiliser des contrôleurs de communication programmés, appelés frontaux.

Un frontal, ou encore processeur frontal, est réalisé autour d'un microprocesseur connecté à une ou plusieurs mémoires dont la fonction dans le système constitué autour de l'ordinateur auquel il est associé, est de réduire la charge de l'unité centrale de cet ordinateur en effectuant une partie de la gestion des messages émis par les différents terminaux appartenant à ce système.

Il est caractérisé par :
- un logiciel de base beaucoup plus simple que celui de l'unité centrale, contenant des modules spécialisés permettant de gérer la ligne de transmission reliant entre eux les terminaux de l'ordinateur et celle du réseau, et ayant des facilités pour constituer des files d'attente de messages (en mémoire principale ou en mémoire secondaire).
   Ce logiciel doit en outre permettre l'exécution simultanée d'un grand nombre de processus ;
- Les fonctions d'entrée et sortie sont réalisées pour gérer rapidement de nombreuses interruptions, ce qui implique des mécanismes de changement de contexte du microprocesseur très performants, ainsi que des niveaux multiples d'interruption.

En d'autres termes, le frontal réalise des fonctions de contrôle du réseau de télécommunications, c'est-à-dire des lignes et des terminaux de ce dernier et assure le stockage temporaire des messages dans la mémoire qui lui est associée. Le mode de connexion du frontal au central et la répartition des charges de travail entre eux est variable selon les constructeurs. Ainsi, dans l'ordinateur de dénomination commerciale DPX 2000 de la Société BULL S.A., le contrôleur de communication se compose d'une base unité d'échange qui reçoit les données provenant du central de l'ordinateur ou des différents terminaux dépendant de celui-ci, et gère les couches hautes de communication du modèle (3 à 7 essentiellement) de référence OSI défini par l'ISO (stockage de données, partage des ressources et des données, contrôle d'accès, file d'attente, sauvegarde, reprise, etc ...) et une unité périphérique disposée entre l'unité d'échange et l'équipement de terminaison de circuit de données ETCD lui-même connecté à la ligne de transmission. L'unité périphérique effectue la gestion des communications entre la base unité d'échange et les autres terminaux du réseau (autres que ceux dépendant de l'ordinateur) ainsi que le multiplexage et le démultiplexage temporels des différents canaux de données de la liaison entre le terminal et l'autocommutateur téléphonique (couche 2 du modèle ISO). On notera qu'un autocommutateur téléphonique numérique, de type privé est également appelé PABX.

L'une des tendances actuelles du développement technologique dans le domaine des réseaux de transmission de données est le regroupement du traffic téléphonique et des transmissions de données et plus généralement de l'ensemble du traffic numérique sur un infrastructure commune. Ceci est dû essentiellement à l'introduction progressive des techniques numériques dans le réseau téléphonique pour la commutation et la transmission entre commutateurs d'une part, et pour la distribution et le raccordement d'abonnés d'autre part. C'est l'objectif du réseau numérique à intégration de service (RNIS, sigle français) dont l'équivalent anglais est Integrated Services Digital Network (ISDN, sigle anglais).

Le réseau numérique à intégration de services permet d'offrir, en dehors de la téléphonie numérique, :
- une plus grande variété d'applications téléinformatiques, en particulier celles qui nécessitent des transferts de fichiers dans un délai court ;
- le multiplexage, sur une même ligne d'abonnés, de divers canaux à faible débit supportant plusieurs flux téléinformatiques simultanés, ou encore des signaux de téléalarme ou télémesure ou télécommande ;
- la transmission d'images fixes dans des conditions améliorées de qualité et de rapidité avec par exemple, la télécopie rapide ;
- la perspective de transmettre dans un prochain avenir (d'ici à 1995) des images animées (télévision, vidéophone, vidéoconférence, etc ...).

Le RNIS est destiné à être utilisé principalement en Europe et en particulier en France. De ce fait, il comporte un certain nombre d'interfaces normalisés selon des normes ECMA. Pour les communications téléinformatiques entre ordinateurs et PABX, l'interface la plus intéressante est l'interface dite S₂ définie par la norme européenne ECMA 104. L'interface S₂ est encore appelée liaison de communications du type S₂. Cette liaison utilise donc comme support physique une ligne de transmission téléphonique.

Une liaison du type S₂ possède un débit de 2048 mégabits/s (ou encore Mbps) et comporte 32 canaux distincts, à savoir 30 canaux dits de type B pour la transmission des données avec un débit de 64 kilobits/s (ou encore Kbps), un canal dit de type D dit de signalisation à 64 kilobits/s et un canal de verrouillage de trame dont le débit est également de 64 kilobits/s. Le principe de la liaison S₂ est le multiplexage temporel, chaque voie temporelle constituant un canal distinct. Le multiplexage dans le temps des différents canaux ou voies signifie qu'entre deux échantillons successifs d'une même voie, on dispose de 125 microsecondes pour transmettre des mots de huit bits (octets) qui constituent les valeurs codées des échantillons relatifs aux autres voies. Le multiplexage consiste donc à affecter à l'intérieur d'un intervalle de temps de 125 microsecondes, un intervalle de temps pour chaque échantillon d'une voie égal à 3,9 microsecondes. Les différents échantillons entrelacés sont émis successivement, la même voie d'indice i se présentant toutes les 125 microsecondes. On constitue ainsi un ensemble de 32 octets d'une durée de 125 µs que l'on désignera sous le nom de trame temporelle (à ne pas confondre avec la trame d'informations définie plus haut). En pratique, l'exploitation de celle-ci nécessite la présence d'un mot de verrouillage transporté par le canal de verrouillage de trame qui permet au récepteur de repérer le début de la trame et donc les différentes voies. En d'autres termes, toute trame temporelle comporte 32 intervalles de temps (IT) à 8 bits, repérés de 0 à 31, soit les intervalles de temps IT₀ à IT₃₁. L'intervalle de temps IT₀ indique le début de la trame temporelle et l'intervalle de temps IT₁₆ véhicule la signalisation pour l'ensemble des canaux de données. Ce canal D de signalisation (auquel correspond bien entendu l'intervalle de temps IT₁₆) permet de connaître l'identité et la nature de chaque correspondant (c'est-à-dire de chaque terminal ou de chaque ordinateur) ainsi que le type de protocole sur chacun des autres canaux, et la charge globale nécessaire au traitement de l'ensemble de la liaison (car tous les canaux ne sont pas nécessairement utilisés au même moment).

On voit donc ainsi que chaque canal de donnée, pendant chaque intervalle de temps, transporte 8 bits toutes les 125 microsecondes, soit 8 x 8000 = 64 kilobits/s. Le débit total en ligne est donc égal à la somme de tous les débits des 32 canaux soit 64 x 32 = 2048 kilobits/s.

Il convient de préciser que chaque canal est prévu pour transporter des communications utilisant n'importe quel type de protocole de transmission et n'importe quel type de codage des informations. Les protocoles les plus fréquemment utilisés sont le protocole HDLC ou le protocole ECMA 102. Cela signifie que sur un même canal de données, des informations successives provenant par exemple de terminaux différents peuvent être transmises avec des protocoles de transmission différents. Cela signifie que d'un canal à l'autre les protocoles peuvent être différents, et que sur un même canal au cours du temps les protocoles utilisés peuvent être différents également.

Selon les besoins qui se font sentir dans l'échange de communications entre terminaux reliés par une liaison de type S₂, il peut être nécessaire pour le contrôleur de communications d'un ordinateur de gérer une liaison S₂ dans son ensemble ou au contraire de gérer plusieurs liaisons de type S₂ dans lesquelles seulement un nombre déterminé de canaux de données sont utilisés. Le contrôleur de communications doit donc avoir comme principale qualité une grande souplesse d'utilisation et une grande rapidité.

La norme ECMA 104 étant encore récente (19..) les contrôleurs de communications gérant une liaison de type S₂ sont rares.

Les solutions actuelles résident dans l'utilisation de composants spécialisés, c'est-à-dire de contrôleurs de communications spécialisés gérant chacun un nombre fini de canaux selon un protocole particulier donné. Il en est ainsi du contrôleur de la Société SIEMENS, dont l'appellation commerciale est ITA et qui gère un seul canal en ECMA102. De plus, l'interface physique entre la ligne de transmission et le contrôleur de communications est intégrée à ce contrôleur lui-même. Il en résulte que l'utilisation de composants spécialisés pour gérer un protocole déterminé implique une spécialisation des contrôleurs et qu'il est nécessaire d'avoir autant de contrôleurs que de protocoles à gérer, ce qui est assez lourd et coûteux.

On connaît également des composants pouvant traiter plusieurs canaux simulténément. Un tel composant est décrit dans l'article extrait de IEEE 87 intitulé "an eight channel synchronous data controller for a primary rate interface to ISDN" de H.T. French et Al. Il comprend un transmetteur-récepteur (transceiver) du côté de la liaison RNIS et un contrôleur DMA du côté de l'ordinateur qui cherche à envoyer les données vers la liaison. Il est donc nécessaire d'utiliser quatre contrôleurs identiques pour une liaison RNIS 32 canaux. Par ailleurs, de tels contrôleurs ne comprennent pas de processeur pour effectuer l'adaptation de protocole entre le bus de l'ordinateur et la liaison RNIS.

De plus, pour des protocoles qui sont particuliers à un constructeur donné ou dont la normalisation est récente, il n'y a pas de composant spécialisé.

En l'état actuel de l'état de la technique, pour former un contrôleur de communications pouvant gérer une ou plusieurs liaisons de type S₂ il faut donc constituer un ensemble de composants spécialisés dont chacun est adapté au traitement d'un protocole déterminé. Cela est peu pratique, encombrant et coûteux.

La présent invention permet de remédier à ces inconvénients en constituant un contrôleur de communications extrêmement rapide utilisant un processeur de signal (on rappelle que les processeurs de signal sont des processeurs dont l'utilisation habituelle consiste à réaliser des opérations mathématiques sur des données numériques : multiplication, addition, intégration, Transformées de Fourier etc ...) et d'un dispositif d'allocation dynamique travaillant sous la commande de la base unité d'échange telle que définie ci-dessus, permettant d'affecter à un moment déterminé un canal de donnée utilisant un protocole donné à une voie de transmission physique déterminée, le contrôleur de communications comportant n voies physique différentes. Le dispositif d'allocation dynamique peut, suivant des impératifs de transmission des télécommunications à un moment déterminé, affecter à la voie physique à laquelle correspondait un canal de données ayant un premier protocole particulier, un autre canal de données utilisant un second protocole ou encore affecter le canal de données utilisant le premier protocole donné à une autre voie physique. Ceci définit une allocation dynamique des protocoles de communication utilisés sur les différents canaux de données à des voies physiques déterminées. L'allocation dynamique fait donc, sur une même voie physique, changer de protocole (ce changement étant transparent pour les autres voies) ou changer de voies pour le même protocole, le tout sans remettre à zéro les autres voies.

Ainsi, le contrôleur de communications selon l'invention peut gérer une ou plusieurs liaisons de type S₂ simultanément, tout en ayant un faible encombrement et en étant peu coûteux.

Selon l'invention, le contrôleur de communications RNIS multiprotocole assurant la gestion d'au moins une liaison de communication de type S₂, supportée physiquement par une ligne de transmission et comprenant un nombre déterminé de canaux de données gérés selon une pluralité de protocoles, entre un ordinateur et un ensemble de terminaux reliés par l'intermédiaire d'un autocommutateur téléphonique, comprenant :
- une base unité d'échange recevant les données provenant de l'ordinateur ou des terminaux par l'intermédiaire de la liaison, et gérant les couches hautes de communication du modèle OSI,
- une unité périphérique disposée entre la base unité d'échange et un équipement de terminaison de circuits de données ou ETCD lui-même connecté à la ligne de transmission, ce dernier adaptant les signaux électriques provenant de l'unité d'échange via l'unité périphérique aux supports de transmission, l'unité périphérique effectuant la gestion des communications entre l'ordinateur et les autres terminaux ainsi que le multiplexage et démultiplexage temporels des différents canaux de données de la liaison, est caractérisé en ce que l'unité périphérique comprend, disposés en série entre l'ETCD et l'unité d'échange, un dispositif d'allocation dynamique, une mémoire vive double accès comprenant n voies physiques distinctes, de type fifo, tant à l'émission qu'à la réception, un processeur de signal associé à une mémoire programmable, le dispositif d'allocation recevant les données et un signal de synchronisation envoyé par l'ETCD sur un bus série de données véhiculant m voies temporelles avec m supérieur ou égal à n, transformant les ensembles de bits série en ensemble de bits parallèles envoyés dans la mémoire double accès, assurant la concentration des m voies temporelles sur les n voies physiques de la mémoire double accès par allocation dynamique des m voies temporelles sur les n voies physiques sous la commande de l'unité d'échange, le processeur lisant (ou écrivant) dans chaque voie de la mémoire double accès, les données qui y sont inscrites (ou lues) par le dispositif d'allocation, les stockant temporairement en mémoire, analysant l'état des trames de données suivant le type de protocole utilisé pour transmettre celles-ci, et en extrayant les données pour les transférer ensuite à la base unité d'échange.

D'autres caractéristiques et avantages de la présente invention apparaîtront dans la description suivante donnée à titre d'exemple non limitatif et en se référant aux dessins annexés. Sur ces dessins :
- La figure 1 rappelle comment sont transmises des informations d'un premier terminal vers un second terminal,
- La figure 2 rappelle comment est réalisée une liaison de communications de type S₂,
- La figure 3 montre un réseau local comprenant une pluralité de terminaux et d'ordinateurs reliés par au moins une liaison de type S₂ aux autres terminaux par l'intermédiaire d'un autocommutateur téléphonique, ou PABX
- La figure 4 montre comment un contrôleur de communications selon l'invention est relié à plusieurs liaisons de type S₂ et au bus de liaison de l'ordinateur auquel il est associé,
- La figure 5 montre comment fontionne un adaptateur de liaison S₂ au bus série de donnée auquel est relié le contrôleur de communications selon l'invention,
- La figure 6 montre différents signaux émis par l'adaptateur de liaison de la figure 5 vers le bus de données de la figure 5,
- La figure 7 montre les éléments caractéristiques essentiels du contrôleur de communications selon l'invention,
- La figure 8 est une vue plus détaillée de la figure 7,
- La figure 9 est une vue détaillée des éléments constitutifs essentiels de l'unité périphérique du contrôleur de communications selon l'invention,
- La figure 10 montre comment est constituée la mémoire à double accès de l'unité périphérique du contrôleur selon l'invention,
- La figure 11 illustre le fonctionnement détaillé de l'unité périphérique.

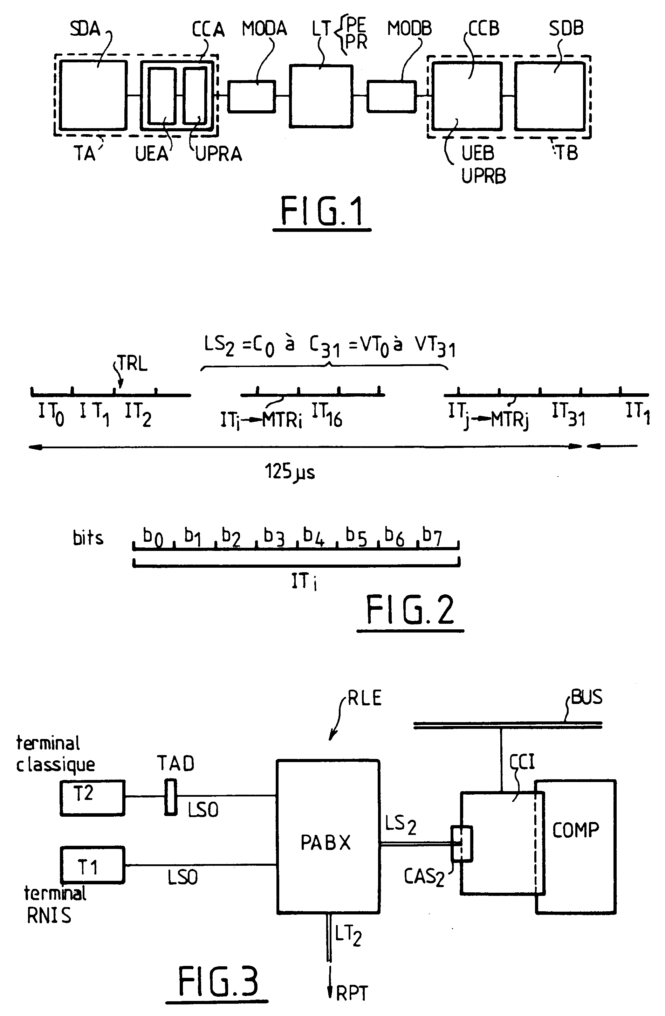

On considère la figure 1 qui montre schématiquement comment sont transmises les données d'un premier terminal TA à un second terminal TB. Le terminal TA comprend une source de données SDA et un contrôleur de communications CCA, alors que le second terminal TB comprend une source de données SDB et un contrôleur de communications CCB.

Un premier équipement de terminaison de circuit de données (ETCD) à savoir MODA est connecté entre le contrôleur de communications CCA et la ligne de transmission LT. De même, un second équipement de terminaison de circuit de données MODB est connecté entre le contrôleur de communications CCB et la ligne de transmission LT. Cette ligne de transmission peut être constituée de deux paires de fils téléphoniques, une paire pour l'émission PE et une paire pour la réception PR.

Le contrôleur de communications CCA comprend une unité d'échange UEA et une unité périphérique UPRA ; de même, le contrôleur CCB comprend une unité d'échange UEB et une unité périphérique UPRB. Le rôle, la nature et le fonctionnement des différents éléments cités ci-dessus ont été détaillés plus haut. En particulier, les données sont émises par la source de données STA en parallèle vers le contrôleur de communications CCA qui les transmet en série à l'élément MODA qui adapte le signal électrique à la ligne de transmission LT. Le contrôleur CCA contrôle et gère la transmission des communications entre le terminal TA et le terminal TB. Il en est de même réciproquement pour le contrôleur de communications CCB.

On considère désormais la figure 2 qui montre comment est constituée une liaison de communication LS₂ du type S₂ défini par la norme européenne ECMA 104. La liaison LS₂ est composée de 32 canaux C₀ à C₃₁, dont on a vu plus haut qu'ils constituaient un ensemble de voies temporelles distinctes VT₀ à VT₃₁. Le débit d'informations transmis sur chaque canal ou voie temporelle est de 64 kilobits/s, l'ensemble de la liaison LS₂ ayant un débit de 2,048 mégabits/s. En une seconde, on peut donc véhiculer 8000 trames élémentaires temporelles TRL comprenant 32 octets émis chacun pendant les intervalles de temps IT₀, IT₁, ..., IT₃₁. Chaque intervalle de temps ITᵢ permet d'acheminer 8 bits b₀ à b₇. La durée d'une trame élémentaire temporelle TRL est de 125 microsecondes et la durée d'un intervalle de temps ITᵢ est de l'ordre de 3,9 microsecondes. L'intervalle de temps IT₀ permet de repérer le début de chaque trame élémentaire TRL, alors que l'intervalle de temps IT₁₆ transporte des informations de signalisation permettant de connaître l'identité et la nature de chaque correspondant qui émet par l'intermédiaire d'un terminal et d'en déduire le type de protocole sur chacune des voies temporelles ou canal et la charge globale nécessaire au traitement de la liaison LS₂.

On sait que chaque terminal tel que TA ou TB émet des messages d'informations individuels, encore appelés trames d'informations que l'on peut désigner par exemple par MTR. Une telle trame MTR est émise selon un type de protocole déterminé, par exemple HDLC, sur l'une des voies temporelles VT₀ à VT₃₁ par exemple la voie temporelle VTᵢ. La trame MTRᵢ est donc émise sous forme de successions d'octets, sur la voie temporelle VTᵢ, à l'intérieur de chaque intervalle de temps ITᵢ, et ce toutes les 125 microsecondes. Il en serait de même pour une autre trame ou message individuel MTRⱼ émis par un autre terminal sur la voie temporelle VTⱼ sous forme d'une succession d'octets émis pendant l'intervalle de temps ITⱼ, selon par exemple un protocole différent d'HDLC tel que le protocole ECMA 102. L'une des particularités de la liaison d'informations LS₂ définie par la norme européenne ECMA 104 est que, sur une même voie temporelle, on peut faire circuler successivement des trames d'informations ou messages individuels selon des protocoles différents. On voit qu'une liaison de type S₂ offre une souplesse d'utilisation considérable. Par ailleurs, c'est le rôle du contrôleur de communications CCA ou CCB de recevoir l'ensemble des octets relatifs à une même trame MTRᵢ, et reconstituer l'ensemble de cette trame pour que celle-ci puisse être lue, comprise et interprétée par l'une des sources de données SDA ou SDB. En outre, on peut conclure de ce qui précède qu'il ne s'agit pas de confondre une trame d'information ou message individuel MTRᵢ émis par l'un quelconque des terminaux et qui a une durée variable suivant le message émis et une trame élémentaire temporelle de type TRL qui a toujours la même durée à savoir 125 microsecondes et comporte 32 octets, chacun de ceux-ci appartenant à une trame d'information MTRᵢ, MTRⱼ différente.

On considère la figure 3 qui montre un réseau local RLE de type RNIS. Un tel réseau comprend plusieurs terminaux dits classiques dont un seul à savoir le terminal T₂ est représenté à la figure 3 et qui émet des informations avec un débit qui peut être de l'ordre de 1200, 9600 ou 19200 bits/s et un ensemble de terminaux de type RNIS dont un seul est représenté à savoir T₁. Chacun de ces terminaux T₁ ou T₂ est relié par une liaison de communication LS₀ de type S₀ définie par la recommandation I430 du CCITT, supportée physiquement par une ligne de transmission téléphonique (du type de la ligne LT de la figure 1), à un autocommutateur téléphonique privé plus connu dans l'état de la technique sous le sigle anglo-saxon PABX. La liaison LS₀ a un débit de 64 kilobits/s. De ce fait, entre le terminal classique T₂ et la liaison LS₀ qui lui est associée et qui le relie au PABX, on dispose un terminal adaptateur TAD qui permet d'adapter le débit des informations émis par T₂ au débit de 64 kilobits/s requis par la norme européenne ECMA 104, pour chaque canal de données.

Le réseau local RLE comprend également, au moins un ordinateur tel que l'ordinateur COMP associé à un contrôleur de communications tel que le contrôleur de communications selon l'invention CCI. Celui-ci est relié à la liaison de communication LS₂ par l'intermédiaire d'un équipement terminal de circuit de données CAS₂ également appelé adaptateur ou encore carte S₂. La liaison LS₂ permet de relier l'adaptateur CAS₂ et par suite, le contrôleur de communications CCI à l'autocommutateur PABX. Il convient de préciser que l'autocommutateur PABX peut être relié par une liaison LT₂ au réseau public téléphonique RPT. De ce fait, l'ordinateur COMP peut être relié à tout terminal géographiquement éloigné, par l'intermédiaire de la liaison LS₂, du PABX et du réseau public RPT. Le PABX joue le rôle d'un concentrateur de lignes.

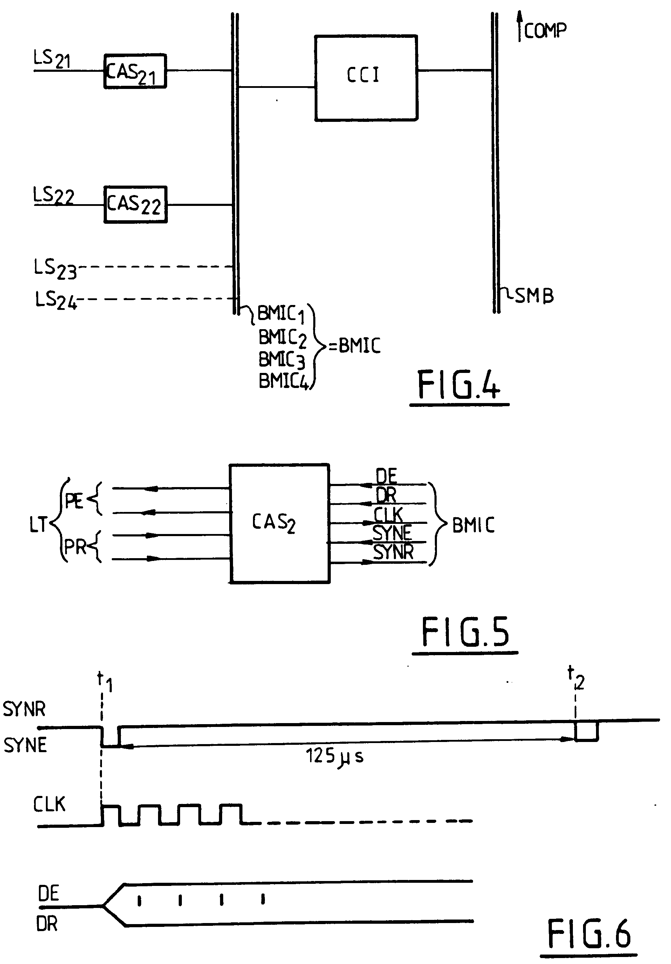

On considère la figure 4 qui montre un coupleur selon l'invention CCI connecté entre un bus de données SMB reliant l'unité centrale et les différents terminaux d'un ordinateur COMP, par exemple un ordinateur de type DPX 2000 de la Société BULL S.A., d'une part, et d'autre part un bus BMIC et plusieurs liaisons de type S₂, à savoir LS₂₁, LS₂₂, LS₂₃, LS₂₄. A chacune de ces liaisons correspond un adaptateur, à savoir CAS₂₁ à CAS₂₄. A chacune des liaisons et à chaque adaptateur correspond un bus, à savoir BMIC₁ à BMIC₄. Le bus BMIC est donc constitué par l'association des 4 BUS BMIC₁ à BMIC₄. Les trames temporelles sur chacun des bus BMIC₁ à BMIC₄ sont transmises de manière synchrone. Sur chacun de ceux-ci, les informations sont transmises en série, alors que le bus SMB est un bus de type parallèle. Ce dernier est par exemple du type de celui décrit dans la notice technique du CNET relatif à l'ordinateur SM 90 (dont la désignation BULL est QUESTAR 700-DPX 2000), sous la référence ST/PAA/OGE/SML/1/SM90 édité par BULL SEMS. Il convient de noter que ce bus SMB est un bus parallèle sur 32 bits.

Chacune des liaisons de communication LS₂₁ à LS₂₄ comportant 32 voies temporelles, on voit que le contrôleur de communications, dans l'exemple de réalisation qui sera décrit ci-dessous, est capable de traiter 128 voies temporelles pouvant chacune transporter au cours du temps des trames d'informations MTR selon plusieurs protocoles déterminés.

On considère la figure 5 qui illustre le rôle d'un adaptateur CAS₂. Ce dernier est connecté à la ligne de transmission LT et par suite à chacune des paires de fils téléphoniques PE et PR qui supportent physiquement une liaison de communication de type LS₂ définie à la figure 2.

On sait que les informations sont transmises sur chacune des voies temporelles selon des protocoles déterminés, les données transportées par chacune de ces voies étant codées également d'une manière connue. D'autre part, le contrôleur de communications CCI selon l'invention fonctionne, dans un exemple particulier préféré de réalisation de l'invention en code NRZ. On voit donc que l'adaptateur S₂ a pour rôle de transformer les données transmises par la liaison de communication S₂ selon des codes connus et déterminés en données compréhensibles pour le contrôleur de communications CCI, c'est-à-dire codées en NRZ. L'adaptateur S₂ effectue donc des transcodages de données. Par ailleurs, l'adaptateur CAS₂ récupère sur chacune des voies temporelles un signal d'horloge CLK utilisé tant à l'émission qu'à la réception, transmet en réception les données DR au contrôleur CCI et reçoit à l'émission les données DE venant du contrôleur en code NRZ. Il extrait de chaque trame temporelle TRL un signal de synchronisation de réception SYNR constitué d'une suite d'impulsions émises aux instants successifs t₁, t₂, etc ... séparés les uns des autres par un intervalle de temps égal à 125 microsecondes, soit la durée d'une trame temporelle élémentaire TRL. Le signal de synchronisation SYNE à l'émission est synchrone du signal SYNR.

Le signal d'horloge CLK est un signal périodique carré qui a une fréquence d'environ 2,048 MHz.

Les données DR et DE sont telles que chaque bit est validé à chaque front montant de chaque signal CLK.

En fait, les données DR et DE qui sont transmises par les bus BMIC₁ à BMIC₄ sont telles que les trames temporelles TRL comportent 31 voies utiles, la voie IT₀ (utilisée pour le verrouillage des trames TRL sur chacune des liaisons LS₂₁ à LS₂₄) étant désormais utilisée pour véhiculer d'une part, des signaux de commandes particuliers provenant du contrôleur CCI pour piloter chacune des cartes CAS₂₁ à CAS₂₄, et d'autre part, en réception, des signaux indiquant des incidents de transmission ou de fonctionnement des liaisons LS₂₁ à LS₂₄.

On voit que l'adaptateur CAS₂ a un rôle tout à fait analogue à un équipement terminal de circuit de données classique tel que l'élément MODA ou MODB montré à la figure 1. Par ailleurs, les techniques de transcodage nécessaires pour passer en code NRZ à partir de codes véhiculés par chacun des canaux de la liaison LS₂ (tel que le code HDB3 pour toute la liaison spécifié par ECMA104) sont parfaitement connues, ainsi que les méthodes d'extraction de signaux de synchronisation et d'horloge.

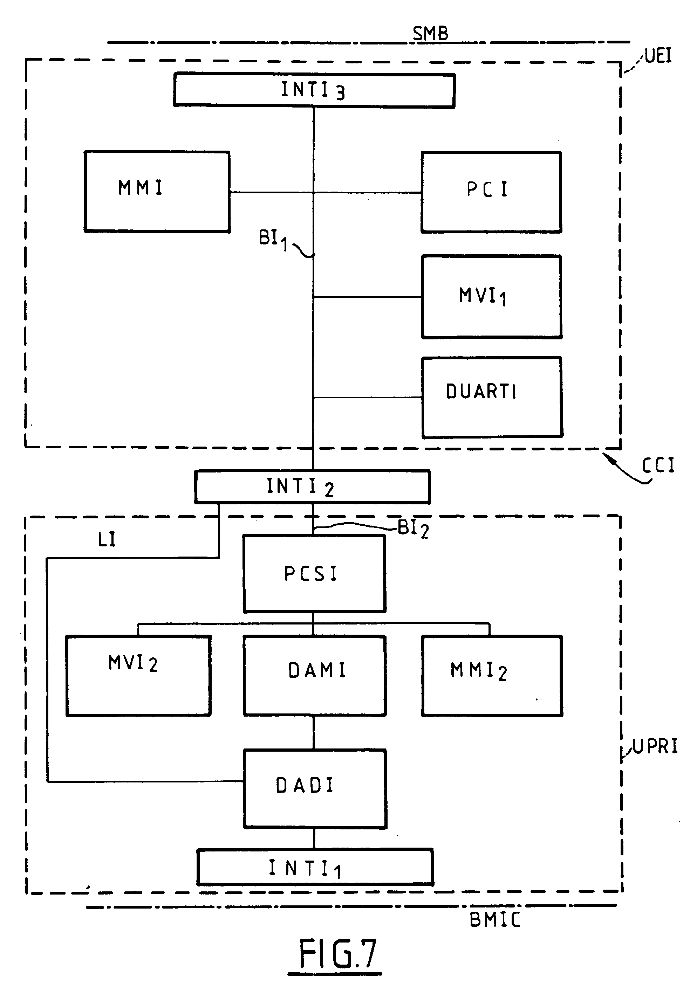

On considère désormais la figure 7 qui montre les parties constitutives essentielles du contrôleur de communications CCI selon l'invention.

Ce contrôleur CCI comprend :
- une base unité d'échange UEI, que nous appellerons unité d'échange pour simplifier,
- une unité périphérique UPRI,
- un interface INTI₂ entre l'unité d'échange UEI et l'unité périphérique UPRI.

L'unité d'échange UEI est reliée par le bus parallèle sur 32 bits SMB aux différents terminaux et à l'unité centrale de l'ordinateur COMP, par exemple un ordinateur de type DPX 2000 de la Société BULL S.A., alors que l'unité périphérique est reliée au bus BMIC montré à la figure 4.

Ainsi qu'il a été dit plus haut, l'unité d'échange UEI traite les couches hautes 3 à 7 de télécommunications du modèle OSI après avoir reçu les données provenant, soit de l'unité centrale et des différents terminaux de l'ordinateur COMP, soit les données provenant des liaisons de communication LS₂₁ à LS₂₄ par l'intermédiaire de l'unité périphérique UPRI et de l'interface INTI₂.

L'unité périphérique UPRI traite donc les couches basses (en fait la couche 2) de télécommunications du modèle OSI. ELle reçoit les différentes trames temporelles TRL (voir figure 2) et en extrait les données, voie temporelle par voie temporelle, regroupe les données transmises sur chacune de celles-ci pour reconstituer en tout ou partie les trames d'informations MTRᵢ ou MTRⱼ (se reporter à la description de la figure 2). Elle vérifie que ces trames MTRᵢ et MTRⱼ etc ... sont correctes et envoie ces données par l'intermédiaire de l'interface INTI₂ à l'unité d'échange UEI. L'unité périphérique UPRI fait donc un compte-rendu de l'état des trames d'informations MTRᵢ à MTRⱼ etc ... à l'unité d'échange UEI et lui indique si ces trames comportent ou non des erreurs. En fonction de cela, l'unité d'échange demande ou non la réémission de la trame MTRᵢ (ou MTRⱼ) au terminal qui l'a précédemment émise, suivant que cette dernière comporte ou non une erreur. On voit donc que la partie périphérique UPRI analyse et constate l'état des trames mais ne décide pas de l'usage qui doit en être fait. Ceci est du ressort de l'unité d'échange UEI. A l'inverse, à l'émission d'une trame MTRᵢ, l'unité périphérique UPRI reçoit celle-ci envoyée par l'unité d'échange UEI par l'intermédiaire de l'interface INTI₂, y ajoute de nouveaux bits d'information pour que la trame MTRᵢ soit conforme au protocole, (par exemple, HDLC), selon lequel est émis la trame (par exemple, en HDLC, l'unité périphérique insère des 0 après une succession de 5 bits égaux à 1, calcule le code cyclique d'erreurs CRC, ajoute les drapeaux ou fanions : flag en anglais, ce qui permettra au terminal récepteur du réseau de comprendre que la trame MTRᵢ est émise par UPRI selon un protocole de type HDLC et d'effectuer le traitement approprié).

L'unité périphérique reçoit les données émises par l'unité d'échange UEI en parallèle et les envoie en série sur le bus BMIC. L'unité périphérique émet chaque trame MTRᵢ qui lui est transmise par l'unité d'échange UEI, sous forme d'une succession d'octets transmis en série sur l'une quelconque des voies temporelles VTᵢ (excepté VT₀, voir plus haut) véhiculées par l'un des bus BMIC₁ à BMIC₄.

L'unité d'échange UEI est analogue, dans l'exemple de réalisation décrit ici à l'unité d'échange de l'ordinateur DPX 2000 de la Société BULL. Par ailleurs, elle est construite autour d'un processeur 68020 de la Société MOTOROLA SEMI-CONDUCTORS, par exemple, sise à Colvilles road, Kelvin Estate-East kilbride/Glasgow, Ecosse. Elle est donc décrite dans les notices techniques relatives au processeur 68020 de ce constructeur. Ce processeur PCI est associé à une mémoire morte MMI₁ de 64 koctets, et une mémoire vive MVI₁ de 512 koctets. Ces différents éléments, à savoir PCI, MMI₁, MVI₁ sont reliés par l'intermédiaire d'un même bus interne BI₁, parallèle sur 32 bits dans l'exemple de réalisation décrit ici. Le processeur PCI est rythmé par une horloge de 16,6 MHz.

La mémoire vive MVI₁ contient les programmes de traitement des couches hautes de télécommunication du modèle OSI ainsi que les données provenant de l'unité centrale et des différents terminaux de l'ordinateur COMP via le bus SMB et l'interface INTI₃ avant que celles-ci ne soient transmises, sous la commande du processeur PCI à l'unité périphérique UPRI. Dans le sens inverse, à la réception, la mémoire vive MVI₁ reçoit et stocke les données transmises par l'unité périphérique UPRI via l'interface INTI₂ avant de les transmettre, toujours sous l'ordre du processeur PCI au bus SMB qui les achemine vers l'unité centrale ou les différents terminaux de COMP.

L'unité périphérique UPRI comprend :
- un processeur de signal PCSI associé par l'intermédiaire de son bus interne BI₂ à une mémoire vive MVI₂ et une mémoire morte MMI₂, et à l'interface INTI₂,
- une mémoire double accès DAMI,
- un dispositif d'allocation dynamique des voies temporelles sur les voies physiques de la mémoire double accès, à savoir DADI,
- un interface INTI₁ entre le dispositif DADI et le bus BMIC.

On voit donc que l'unité périphérique UPRI est structurée autour du processeur de signal PCSI. Celui-ci, dans l'exemple de réalisation décrit ici, est un processeur de signal de type TMS320C25 de la Société TEXAS INSTRUMENT. Ce processeur et ses applications sont décrites dans le livre de TEXAS INSTRUMENT "Digital signal processing applications with the TMS 320 Family", ainsi que dans le TMS 3200C25 User's guide. Le processeur de signal TMS 320C25 est rythmé par une horloge à 33,3 Mhz, ce qui correspond à un temps d'accès mémoire de 120 ns. La mémoire morte programmable a une capacité de 64 koctets alors que la mémoire vive a une capacité de 32 Koctets. Les accès à la mémoire morte et à la mémoire vive MMI₂ et MVI₂ s'effectuent sans temps d'attente (temps d'accès 35 µ s). Le processeur de signal PCSI possède une largeur de bus de données BI₂ de 16 bits. L'interface INTI₂ devra donc être conçue de façon à adapter le bus de données BI₂ d'une largeur de 16 bits du processeur de signal PCSI au bus interne de données BI₁ du processeur PCI qui a une largeur de 32 bits. Par exemple, MMI₂ et MVI₂ sont fabriquées par Advanced Micro Devices sous la référence AM 27S51A.

La mémoire morte MMI₂ comprend les programmes de traitement de protocoles de communication (HDLC, ECMA102, ... etc) des différents canaux des liaisons LS₂₁ à LS₂₄. Ces programmes sont écrits sous forme de micrologiciels.

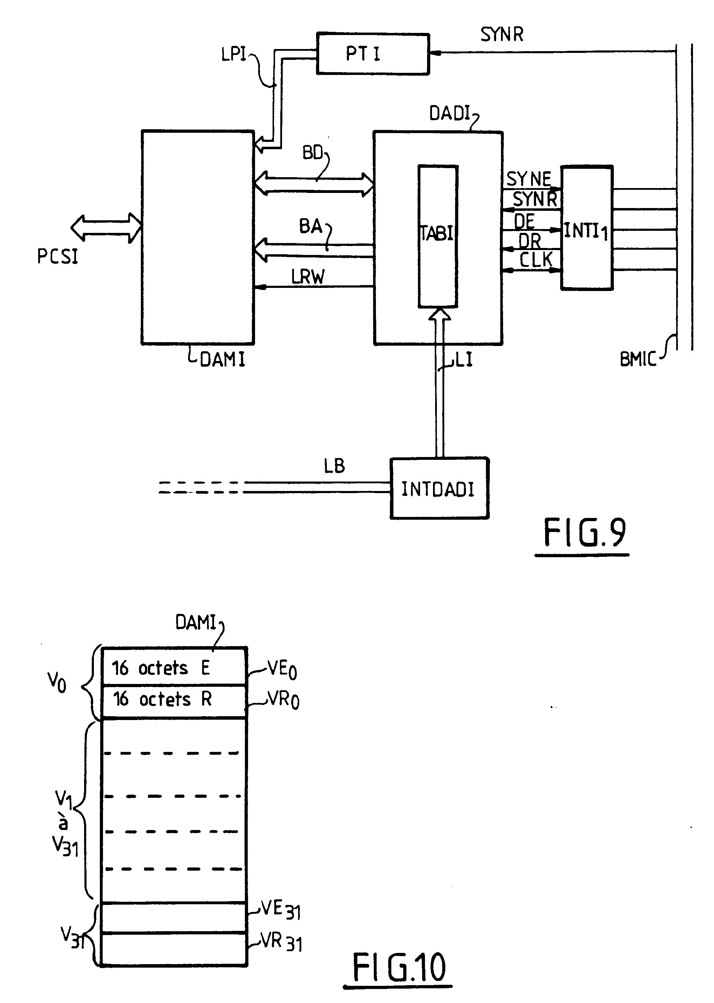

La mémoire double accès DAMI est organisée en 64 éléments distincts de type fifo (first-in, first-out) de 16 octets chacun, chaque élément de type fifo étant attribué à une voie physique et à un sens de transmission (émission ou réception). Ainsi qu'on peut le voir à la figure 10 qui montre de façon plus détaillée comment est constituée la mémoire double accès DAMI, cette dernière contient donc 32 voies distinctes physiques V₀ à V₃₂) chaque voie comprenant une sous-voie (correspondant à un élément fifo de 16 octets) VE réservée à l'émission et une seconde sous-voie VR réservée à la réception. Ainsi, la voie physique V₀ se décompose en deux sous-voies VE₀ et VR₀, la sous-voie VE₀ correspondant à l'émission et VR₀ à la réception de données. Il en est bien entendu de même pour chacune des autres voies V₁ à V₃₁. Ainsi la voie V₃₁ comporte deux sous-voies VE₃₁ correspondant à l'émission et VR₃₁ correspondant à la réception.

Le dispositif d'allocation dynamique DADI est par exemple constitué par un composant intégré de type VLSI ayant par exemple la référence DP3120 de NATIONAL SEMI-CONDUCTORS. Le dispositif d'allocation dynamique DADI est commandé par l'intermédiaire d'une liaison LI par le processeur PCI de l'unité d'échange UEI, via l'interface INTI₂.

L'interface entre le dispositif d'allocation dynamique DADI et le bus BMIC, à savoir INTI₁ est chargé de la remise en forme des signaux provenant soit du dispositif d'allocation dynamique DADI à l'émission soit du bus BMIC en réception. Il réalise donc l'adaptation électrique des signaux entre DADI et BMIC. Cet interface est réalisé par exemple par des composants 74F244 du constructeur R.T.C. pour les signaux dans le sens réception et par les composants 7406 pour les signaux dans le sens émission.

Les grandes lignes du fonctionnement de l'unité périphérique UPRI sont les suivantes. On suppose qu'on fonctionne en réception de signaux. Il est évident que le raisonnement qui va être exposé ci-dessous serait exactement le même à l'émission, les opérations se déroulant dans l'ordre inverse.

Les informations provenant des différents terminaux du réseau RLE via la liaison LS₂ et l'adaptateur CAS₂ et le bus BMIC sont donc transmises sur 128 voies temporelles (4 x 32 voies temporelles, puisqu'il y a 4 bus BMIC₁ à BMIC₄, voir ci-dessus en relation avec la description de la figure 4). Ces signaux transmis en série sont remis en forme par l'interface INTI₁ et transmis au dispositif d'allocation dynamique DADI. Ce dernier, commandé par le processeur PCI via l'interface INTI₂ et la liaison LI affecte l'une des 128 voies temporelles par exemple la 75ème voie temporelle, que nous désignerons par VT₇₅, à l'une des voies physiques V₀ à V₃₁ de la mémoire double accès DADI (par exemple la voie Vₗ où l est compris entre 0 et 31). Cela signifie qu'à l'intérieur d'une trame temporelle TRL (voir figure 2) l'octet d'information véhiculé par la voie temporelle VTᵢ va être affecté à la voie physique Vₗ de la mémoire double accès DAMI (en fait à la sous-voie VRₗ) et que l'octet provenant du dispositif DADI va être stocké momentanément dans cette voie. L'octet correspondant transmis en série par l'interface INTI₁ au dispositif DADI va être transformé en un octet transmis en parallèle à la mémoire double accès DAMI. Ce dernier est donc stocké dans la voie Vₗ puis lu par le processeur PCSI qui va le traiter selon le protocole de la trame MTRᵢ à laquelle appartient l'octet, grâce au programme de traitement de protocole contenu dans la mémoire MMI₂ (en protocole HDLC, par exemple, le processeur PCSI enlève les fanions, désinsère les zéros, lit le code cyclique CRG, en déduit si la trame comporte une erreur). Une fois le traitement effectué sur l'octet, le processeur PCSI transmet ce dernier directement par l'interface INTI₂ à la mémoire vive MVI₁ de l'unité d'échange par une procédure de type bien connu DMA (accès direct mémoire) une telle procédure (et l'interface correspondant, INTDMA, voir plus loin) étant par exemple décrite dans le manuel de MOTOROLA SEMI-CONDUCTORS relatif au processeur 68020. Avant de transmettre l'octet à la mémoire vive MVI₁, le processeur PCSI, peut également stocker l'octet dans la mémoire vive MVI₂ (si la charge de traffic est élevée, par exemple), avant de la transmettre à MVI₁, mais le cas est moins fréquent en pratique. Après avoir été stockées dans MVI₁, les données relatives à une même trame sont transmises (en une ou plusieurs fois) vers l'unité centrale et les différents terminaux de l'ordinateur COMP via le bus SMB.

Dès qu'un autre octet d'une trame d'informations MTRⱼ est transmis sur la voie temporelle VTⱼ, le dispositif d'allocation dynamique DADI affecte la voie physique k à cette voie temporelle VTⱼ. Un processus analogue à celui qui vient d'être décrit ci-dessus se déroule alors avant que la trame MTRⱼ soit transférée après traitement de son protocole, de la mémoire MVI₁ de l'unité d'échange UEI vers l'unité centrale et les terminaux de l'ordinateur COMP.

Il convient de préciser que l'affectation par le dispositif DADI, sous le contrôle du processeur PCI, d'une voie physique Vₗ, Vₖ ... quelconque à une voie temporelle VTᵢ, VTⱼ ne s'effectue pas, dans la pratique, à l'arrivée de chaque octet ITᵢ d'une trame MTRᵢ, ni même lorsque le dernier octet d'une trame TRᵢ arrive sur le dispositif DADI. Dans la pratique, la réaffectation d'une nouvelle voie physique différente de Vₗ (ou Vₖ) à la voie temporelle VTᵢ (ou VTⱼ) n'a lieu que lorsque des centaines voire des milliers de trames MTRᵢ ont transité sur la même voie temporelle VTᵢ. La reaffectation des voies et par conséquent la reprogrammation correspondante du dispositif n'a lieu que lorsqu'il y a nécessité de changer de mode de communication.

En d'autres termes, on peut donc dire que le dispositif d'allocation dynamique DADI effectue, sous le contrôle de l'unité d'échange UEI, la concentration des 128 voies temporelles des 4 liaisons de type S₂ (voir figure 4) sur les 32 voies physiques parallèles V₀ à V₃₁ de la mémoire double accès DAMI. On dit également que le dispositif DADI réalise l'affectation dynamique des différentes voies temporelles de communication sur les voies parallèles physiques de la mémoire double accès DAMI. Etant donné que la mémoire DAMI est du type fifo, on peut dire également de ce fait, qu'il y a concentration des 128 voies temporelles des 4 liaisons du type S₂ sur les 32 voies temporelles parallèles de la mémoire double accès DAMI. Il est clair que cette affectation dynamique des voies temporelles série sur les 32 voies temporelles parallèles s'effectue en fonction des configurations, c'est-à-dire des besoins et des charges de la conversation entre les différents terminaux du réseau dans lequel est inclus RLE, ces besoins et charges étant connus de l'unité d'échange UEI.

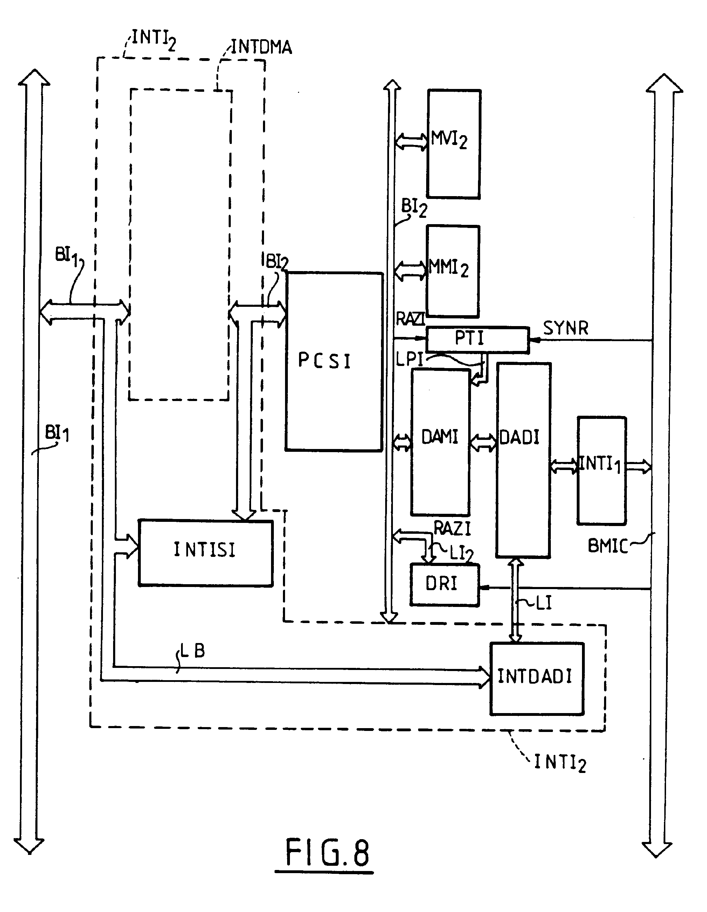

Une description plus détaillée du fonctionnement de l'unité périphérique UPRI sera effectuée ci-dessous en relation avec les figures 8 et 9.

On considère la figure 9. L'interface INTI₂ comporte une interface DMA à savoir, INTDMA, une interface d'interruption et de synchronisation entre le processeur PCI et le processeur PCSI, à savoir INTISI, et enfin une interface entre le processeur PCI et le dispositif d'allocation DADI, à savoir l'interface INTIDADI.

L'interface INTDMA communique avec le processeur de signal PCSI par l'intermédiaire du bus BI₂ et est relié au bus BI₁ du processeur PCI.

L'interface INTISI est relié au bus BI₁ de l'unité d'échange UEI d'une part au bus BI₂ du processeur de signal PCSI d'autre part. Le but de cette interface est de permettre toute communication entre les deux processeurs, le processeur PCI devant pouvoir faire parvenir à tout moment au processeur de signal PCSI un ordre de connexion ou de déconnexion, et la synchronisation entre ces deux processeurs. Cet interface INTISI est essentiellement utilisé lors des phases de remise à zéro (en anglais, reset) des deux processeurs. L'interface INTDADI est relié par l'intermédiaire de la ligne LB au bus BI₁ et par l'intermédiaire de la ligne LI au dispositif DADI.

La ligne LB transmet en même temps les adresses des registres de la table interne TABI du dispositif DADI (voir ci-dessous) correspondant aux n voies physiques de la mémoire DAMI et les données qu'il faut inscrire dans ces registres, c'est-à-dire l'indication des voies temporelles VTᵢ, VTⱼ, qu'il faut inscrire dans ceux-ci. Par contre, la ligne LI présente successivement dans le temps les adresses des registres puis les données qu'il faut y inscrire.

Cette interface INTDADI transmet donc les ordres d'affectation de chacune des 128 voies temporelles sur chacune des 32 voies temporelles parallèles de la mémoire à double accès DAMI (voir description ci-dessus).

On considère désormais les figures 8, 9 à 11 qui montrent de façon plus détaillée comment est constituée et comment fonctionne l'unité périphérique UPRI.

Cette unité comprend outre les éléments déjà cités précédemment, le pointeur PTI et le dispositif de régulation de transfert de données DRI.

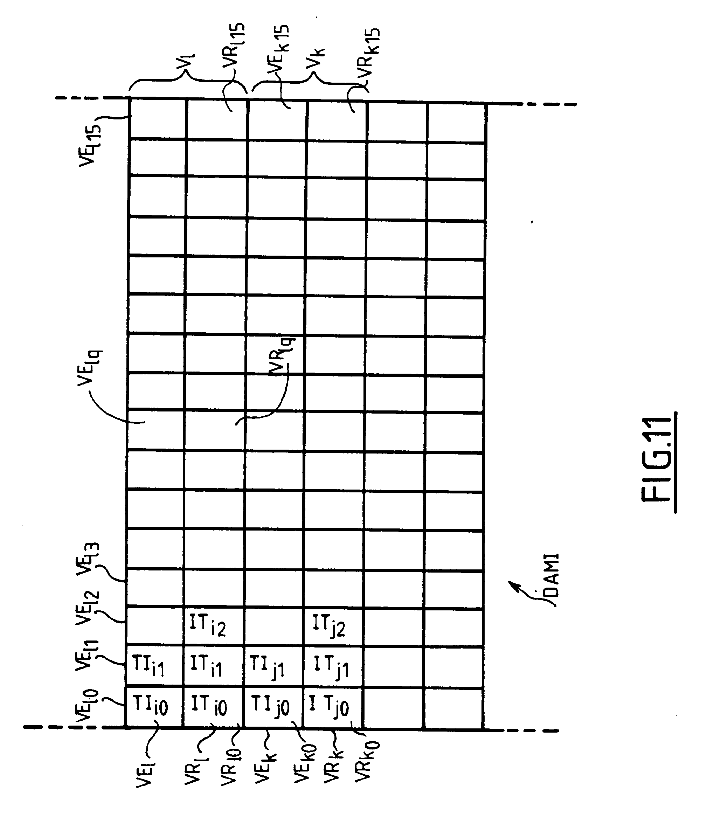

Le pointeur PTI reçoit les signaux de synchronisation SYNR provenant du bus BMIC d'une part, et d'autre part un signal de remise à zéro initiale RAZI envoyé via le bus BI₂ par le processeur de signal PCSI lorsque débute le travail du contrôleur CCI. Ainsi qu'on peut le voir à la figure 9, le pointeur PTI, qui est en fait un compteur modulo 16 dont le contenu est incrémenté d'une unité lorsqu'il reçoit une impulsion de synchronisation (SYNR) correspondant à l'arrivée d'une trame temporelle TRL (voir figure 2) est relié également par l'intermédiaire d'une liaison parallèle LPI sur 4 bits à la mémoire double accès DAMI. On sait que chaque voie Vₗ (sous-voie VE₁ et sous-voie VRₗ) peut contenir 16 octets correspondant à 16 trames temporelles successives. En fait, en pratique (pour des centaines, voire des milliers de trames temporelles TRL successives), les 16 octets contenus dans une même voie Vₗ sont des octets ITᵢ appartenant à 16 trames temporelles successives. Chaque voie Vₗ (sous-voie VEₗ et sous-voie V_{Rl}) comprend donc 16 zones contenant chacune un octet ITᵢ appartenant à une parmi 16 trames temporelles successives, ces 16 zones ayant un rang compris entre zéro et 15 et étant dénommées VE_{lq} et VR_{lq}. (figure 11).

Le pointeur PTI qui indique le rang q d'une trame temporelle TRL_{q} parmi 16 trames successives (entre 0 et 15) indique donc, de ce fait le rang de la zone VE_{lq} (ou VR_{lq}) où est rangé momentanément l'octet ITi de la dite trame TRL_{q} dans la voie Vₗ.

Le dispositif de régulation DRI est en fait constitué par un compteur-décompteur, sur 4 bits, qui permet de connaître l'état de remplissage de la mémoire double accès. Ce compteur reçoit le signal de synchronisation SYNR provenant du bus BMIC. Ce compteur est incrémenté d'une unité chaque fois qu'il reçoit une impulsion de synchronisation, (et par conséquent chaque fois qu'une trame de type TRL arrive sur le dispositif DADI) et est décrémenté de deux unités chaque fois que le processeur de signal a terminé le traitement relatif à deux trames TRL successives. En effet, le processeur de signal effectue des traitements sur 16 bits, soit deux octets successifs. Le processeur de signal peut lire le contenu des compteurs DRI sur ses 4 bits de données de poids faible. Par ailleurs, au début des opérations, le processeur de signal PCSI remet à zéro DRI (et aussi PTI, voir plus haut) puis dès qu'il se dit prêt à travailler autorise le fonctionnement de ce compteur en envoyant un signal d'écriture sur une entrée spéciale de ce dernier (non représentée pour simplifier à la figure 8) par l'intermédiaire de la liaison LI₂.

Le processeur PCSI qui compte également (grâce à un pointeur de type logiciel interne) les trames de type temporel TRL qui lui parviennent effectue la comparaison entre le contenu de son compteur interne et le contenu du dispositif de régulation DRI.

De plus, le processeur PCSI peut générer trois types d'interruptions de fonctionnement du contrôleur CCI suivant certaines valeurs particulières du contenu du dispositif de régulation DRI, qui sont, dans l'exemple de réalisation décrit ici, 15, 12 et 5 (ou 4).

Si le contenu du dispositif de régulation est égal à 15, alors le processeur PCSI génère une interruption vers le processeur PCI, via l'interface INTI₂ (INTISI). Tout est alors remis à zéro, et l'ensemble des opérations qui étaient en cours et n'ont pas pu être traitées par le processeur PCSI devra être repris (aussi bien en émission qu'en réception).

Si le processeur PCSI ne lit pas assez vite les octets contenus dans la mémoire DAMI, le contenu du dispositif DRI va devenir égal à 12. (Mémoire DAMI remplie aux 3/4). Ce dernier envoie un premier signal d'interruption (via LI₂) vers PCSI. Celui-ci, pour résorber son retard (il ne lit et/ou écrit pas aussi vite que les octets parviennent au dispositif d'allocation dynamique et dans la mémoire DAMI), décide, par exemple, de ne traiter que les signaux en réception. En règle générale, son retard se résorbe et le contenu de DRI va redescendre à 4 ou 5 (mémoire DAMI vide aux 3/4). Il génère une seconde interruption via LI₂ vers PCSI qui reprend son travail normal en émission et réception. En général, lorsque la pointe de traffic est passée, le contenu du compteur DRI n'excède jamais 12 et reste compris entre 1 et 3 (traffic normal).

Il est clair que, si, après la première interruption (contenu égal à 12) le contenu du compteur continue à évoluer de manière à atteindre 15, on est ramené au cas décrit ci-dessus, à savoir interruption du processeur PCI et remise à zéro complète. Il convient de noter qu'une interruption qui survient lorsque la mémoire DAMI est vide aux 3/4 (contenu égal à 4) ne peut survenir que lorsque l'interruption correspondant à une mémoire remplie aux 3/4 est intervenue, et vice-versa.

Le dispositif d'allocation dynamique DADI reçoit (ou envoie à) provenant de l'interface INTI₁ relié au bus BMIC, les signaux de données DR (signaux DE), le signal de synchronisation SYNR (SYNE) et l'horloge CLK. Il contient une table TABI qui établit la correspondance entre la voie temporelle VTᵢ des 128 voies temporelles qui sont transmises par le bus BMIC, et la voie physique Vₗ de la mémoire double accès DAMI. Cette correspondance est établie sur commande du processeur PCI de l'unité d'échange UEI, via l'interface INTI₂.

En sortie, le dispositif d'allocation dynamique DADI est connecté par l'intermédiaire d'un bus de données sur 8 bits en parallèle, à savoir BD, d'un bus d'adresse sur 5 bits à savoir BA et d'une liaison LRW monofilaire à la mémoire double accès DAMI. Le bus d'adresse BD transmet l'octet de données correspondant à la voie temporelle VTᵢ, le bus d'adresse BA transmet sur 5 bits l'adresse de la voie physique Vₗ de la mémoire double accès DAMI, alors que la liaison LRW indique s'il s'agit de données d'émission ou de données de réception (DR ou DE). Le dispositif DADI vient écrire des octets dans DAMI à la réception (dans la sous-voie VRₗ) et vient lire ceux-ci à l'émission (dans la sous-voie VEₗ).

Le fonctionnement détaillé de l'ensemble est le suivant :

On suppose que le PCSI a initialisé à zéro (signal RAZI) le pointeur PTI et le dispositif de régulation DRI et qu'il a ensuite autorisé leur fonctionnement. On considère alors une succession de 16 trames temporelles (le raisonnement serait bien entendu identique pour toutes les trames temporelles qui suivront ces 16 premières) à savoir TRL₀, TRL₁, TRL₂, ..., TRL_{q}, ..., TRL₁₆. On considère, de plus, un premier octet de données ITᵢ correspondant à la voie temporelle VTᵢ appartenant à la trame d'informations MTRᵢ et un second octet ITⱼ correspondant à VTⱼ et appartenant à MTRⱼ. (On pourrait également considérer d'autres octets correspondant à d'autres voies temporelles mais le raisonnement serait strictement le même que pour ITᵢ et ITⱼ). Les octets ITᵢ et ITⱼ correspondant aux trames temporelles TRL₀ à TRL₁₅ sont ITᵢ₀ à ITᵢ₁₅ et ITⱼ₀ à ITⱼ₁₅.

Soient alors la première trame TRL₀ et les octets correspondants ITᵢ₀ et ITⱼ₀.

Le signal de synchronisation SYNR arrive sur PTI, DADI et DRI.

Le contenu du pointeur PTI passe de zéro à 1. Le contenu du dispositif de régulation DRI passe de zéro à 1. L'octet ITᵢ₀ est ensuite transmis en série (après avoir été remis en forme par l'interface INTI₁) au dispositif DADI. La table TABI contient alors le numéro l de la voie physique Vₗ dont la sous-voie VRₗ va contenir l'octet ITᵢ₀ qui ira dans la zone VR₁₀. Cette table établit la correspondance entre i et l. Le bus d'adresse BA de sortie de DADI contient alors la valeur l quand il reçoit l'octet ITᵢ₀ (par exemple, cet octet ITᵢ₀ peut être le 75ème octet parmi les 128 qui transporte le bus BMIC et doit aller sur la voie l = 17). L'octet ITᵢ₀ est stocké à l'intérieur des registres (non représentés pour simplifier aux figures 8 et 9) de type série-parallèle de DADI le temps nécessaire à sa transformation d'octet série en octet parallèle. L'octet ITᵢ₀ est alors écrit par DADI dans la zone VRₗ₀, la ligne LPI du pointeur PTI transmettant alors sur 4 bits la valeur zéro qui est le numéro de la zone VRₗ₀ qui contient l'octet ITᵢ₀ (et qui correspond au numéro 0 de la trame TRL₀). Un raisonnement strictement analogue peut être fait pour l'octet ITⱼ₀, transformé par DADI d'octet série en octet parallèle et écrit par celui-ci dans la zone VRₖ₀ de la sous-voie VRₖ de la voie Vₖ qui est la voie physique affectée à la voie temporelle VTⱼ par le processeur PCI et donc par le dispositif DADI.

Une fois que ITᵢ₀ et ITⱼ₀ sont écrits, et avant que la nouvelle impulsion de synchronisation correspondant à la trame TRL₁ n'arrive, DADI vient lire ce qui est contenu dans les zones VEₗ₀ et VEₖ₀ des sous-voies VEₗ et VEₖ des voies Vₗ et Vₖ où le processeur PCSI est censé avoir écrit des octets appartenant à des trames d'émission envoyées par la base unité d'échange UEI. En fait, aussitôt après la réinitialisation, le processeur n'écrit rien dans DAMI tant que le contenu de DRI n'est pas égal à 3. De ce fait, DADI va lire des zones VEₗ₀ et VEₖ₀ dont le contenu est considéré comme vide.

Lorsque TRL₁ arrive, alors le contenu de PTI et DRI passe à 2. DADI écrit les octets ITᵢ₁ et ITⱼ₁ dans les zones VRₗ₁ et VRₖ₁, DADI lisant ce qui est censé être écrit dans les zones VEₗ₁ et VEₖ₁, et lit donc un contenu vide.

Lorsque TRL₂ arrive, alors le contenu de PTI et DRI passe à trois.

Pendant le même temps, DADI écrit les octets ITᵢ₂ et ITⱼ₂ en VRₗ₂ et VRₖ₂ et lit ce qui est censé être écrit dans les zones VEₗ₂ et VEₖ₂ et lit donc un contenu vide. Pendant ce temps, PCSI lit DRI, voit que son contenu est égal à trois, sait donc que deux octets ITᵢ₀, ITᵢ₁, ITⱼ₀, ITⱼ₁ etc ... sont arrivés et vient lire ceux-ci, en fait le traitement suivant le protocole de transmission utilisé pour MTRᵢ et MTRⱼ, puis les stocke avant transmission vers MVI₁ via l'interface INTDMA. PCSI écrit ensuite deux octets d'informations TIᵢ₀ et TIⱼ₀ appartenant à deux trames d'information émises par la base unité d'échange UEI, soit TMRᵢ et TMRⱼ dans les zones VEₗ₀ et VEₖ₀ de DAMI et les deux octets suivants TIᵢ₁ et TIⱼ₁ appartenant aux mêmes trames dans les zones VEₗ₁ et VEₖ₁.

Une fois ceci terminé, PCSI décrémente de deux le contenu de DRI (qui passe à 1) et garde en mémoire (par son pointeur interne) qu'il a lu ce qui était contenu en VRₗ₀ - VRₗ₁, VRₖ₀ - VRₖ₁.

Arrive ensuite la trame TRL₃. Le contenu de PTI passe à 4. Le contenu de DRI passe à 2. DADI écrit ITᵢ₃ et ITⱼ₃ en VRₗ₃ et VRₖ₃, lit le contenu vide de VEₗ₃ et VEₖ₃. PCSI ne fait rien. Lorsque TRL₄ arrive, PTI passe à 5 et DRI passe à 3. On retrouve alors un raisonnement analogue à ce qui se passait à l'arrivée de TRL₂. DADI écrit ITᵢ₄ et ITⱼ₄ en VRₗ₄ et VRₖ₄. PCSI vient lire les octets contenus en VRₗ₂ - VRₗ₃, VRₖ₂ - VRₖ₃. Les phénomènes se reproduisent alors identiques en eux-mêmes jusqu'à l'arrivée de TRL₁₆ ou PTI passe à zéro et DRI à 2 ou 3 (suivant que PCSI a eu un rythme normal ou a été retardé).

ITᵢ₁₆ - ITⱼ₁₆ seront écrits en VRₗ₀ - VRₖ₀ et ainsi de suite, le processus se reproduit identique à lui-même.

## Revendications

1. Contrôleur de communications RNIS multiprotocoles assurant la gestion d'au moins une liaison de communications (LS₂₁ à LS₂₄), supportée physiquement par une ligne de transmission (LT) et comprenant un nombre déterminé de canaux de données gérés selon une pluralité de protocoles, entre au moins un ordinateur (COMP) et un ensemble de terminaux (T₁, T₂, ...) par l'intermédiaire d'un autocommutateur téléphonique (PABX), comprenant :
- une unité d'échange (UE) recevant les données provenant soit de l'ordinateur (COMP), soit des terminaux par l'intermédiaire de la liaison de type S₂, et gérant les couches hautes de communication du modèle OSI,
- une unité périphérique (UPRI) disposée entre l'unité d'échange (UEI) et un équipement de terminaison de circuit de données (CAS₂₁ à CAS₂₄) lui-même connecté à la ligne de transmission (LT), l'unité périphérique (UPRI) effectuant la gestion des communications entre l'ordinateur (COMP) et les autres terminaux (T₁, T₂) ainsi que le multiplexage et le démultiplexage temporels des différents canaux de données de la liaison, caractérisé en ce que l'unité périphérique (UPRI) comprend :
- disposés en série entre l'équipement de terminaison de circuit de données (CAS₂) et l'unité d'échange (UEI),
- un dispositif (DADI) d'allocation dynamique des voies temporelles (VTᵢ, VTⱼ ...) de données correspondant aux différents canaux de données de la liaison de communications,
- une mémoire vive double accès de type fifo (DAMI) comprenant n voies physiques (V₀ à V₃₁) distinctes aussi bien à l'émission qu'à la réception,
- un processeur de signal (PCSI) associé à une mémoire programmable (MMI₂) comprenant des programmes de traitement de la pluralité de protocoles contenus dans la liaison S₂,
- le dispositif d'allocation dynamique recevant ou émettant les données (DR, DE) et un signal de synchronisation (SYNR, SYNE) envoyé soit par l'équipement de terminaison (CAS₂) soit par le processeur de signal (PCSI), sur un bus série de données véhiculant m voies temporelles avec m supérieur ou égal à n, transformant à la réception les ensembles de bits série en ensemble de bits parallèles envoyés dans la mémoire double accès (et réciproquement à l'émission), assurant la concentration des m voies temporelles sur les n voies physiques de la mémoire double accès par allocation dynamique des m voies temporelles sur les n voies physiques, sous la commande de l'unité d'échanges (UEI), le processeur de signal (PCSI) venant lire (ou écrire), dans chaque voie (Vₗ) de la mémoire double accès, lors de l'arrivée de chaque bit du signal de synchronisation (SYNR, SYNE) les données qui sont inscrites (ou lues) par le dispositif d'allocation (DADI), les stocke en mémoire, analyse l'état des trames selon le type de protocole utilisé pour la transmission de celles-ci et en extrait les données qu'elle transmet ensuite à l'unité d'échange.

2. Contrôleur selon la revendication 1, caractérisé en ce que le dispositif d'allocation dynamique (DADI) comprend une table (TABI) où sont inscrites les correspondances entre chaque voie temporelle (VTᵢ, VTⱼ) et chaque voie physique (Vₗ, Vₖ) de la mémoire double accès (DAMI), le dispositif d'allocation (DADI) envoyant à (ou recevant de) cette dernière, d'une part chaque ensemble de bits parallèles, d'autre part le numéro de la voie physique où doit être écrit (ou lu) cet ensemble, et enfin un bit indiquant si cet ensemble doit être écrit (ou lu) dans cette voie physique.

3. Contrôleur selon l'une des revendications 1, 2, caractérisé en ce que chaque voie physique (Vₗ, Vₖ) de la mémoire double accès (DAMI) peut contenir q ensemblesde bits parallèles.

4. Contrôleur selon la revendication 3, caractérisé en ce qu'il comporte un pointeur (PTI) remis à zéro par un signal (RAZI) envoyé par le processeur (PCSI), et recevant ledit signal de synchronisation (SYNR), comptant le nombre de trames temporelles reçues (ou émises) et envoyant à la mémoire double accès (DAMI) le rang q de l'ensemble de bits parallèles qui est inscrit (ou lu) par le dispositif d'allocation dynamique (DADI) dans la voie physique (Vₗ, Vₖ).

5. Contrôleur selon la revendication 4, caractérisé en ce que le pointeur (PTI) est constitué par un compteur modulo 16.

6. Contrôleur selon l'une des revendications 1, 2, 3, 4, 5, caractérisé en ce qu'il comporte un dispositif de régulation de transfert de données (DRI) recevant le signal de synchronisation (SYNR), comptant le nombre de trames temporelles reçues (ou émises) par le dispositif d'allocation, décrémenté par le processeur de signal d'un nombre d'unités donné chaque fois qu'un nombre équivalent d'ensemble de bits est lu (ou écrit) par le processeur de signal (PCSI) dans la mémoire double accès (DAMI), et générant une interruption momentanée de tout ou partie des opérations du processeur de signal lorsque son contenu excède une première valeur donnée ou devient inférieure à une seconde valeur donnée après avoir été supérieure à la première ou vice-versa.

7. Contrôleur selon la revendication 6, caractérisé en ce que le dispositif de régulation (DRI) est constitué par un compteur modulo 16.

## Patentansprüche

1. ISDN-Multiprotokoll-Kommunikationssteuervorrichtung zur Verwaltung wenigstens einer Kommunikationsverbindung (LS₂₁ bis LS₂₄), die physisch durch eine Übertragungsleitung (LT) unterstützt wird und eine bestimmte Anzahl von Datenkanälen enthält, die gemäß mehrerer Protokolle verwaltet werden, wobei sich die Leitung zwischen wenigstens einem Rechner (COMP) und einer Gruppe von Endgeräten (T₁, T₂, ...) über eine automatische Telefonvermittlungseinheit (PABX) erstreckt, enthaltend:
- eine Austauscheinheit (UE), die die Daten vom Rechner (COMP) oder von den Endgeräten über die Verbindung des Typs S₂ empfängt die hohen Kommunikationsniveaus des Models CSI verwaltet,
- eine Peripherieeinheit (UPRI), die zwischen der Austauscheinheit (UEI) und einer Datenkreis-Abschlußvorrichtung (CAS₂₁ bis CAS₂₄) angeordnet ist, die ihrerseits mit der Übertragungsleitung (LT) verbunden ist, wobei die Peripherieeinheit (UPRI) die Verwaltung der Übertragungen zwischen dem Rechner (COMP) und den anderen Endgeräten (T₁, T₂) sowie das zeitliche Multiplexieren und Demultiplixieren der verschiedenen Datenkanäle der Verbindungen bewirkt, dadurch gekennzeichnet daß die Peripherieeinheit (UPRI) folgendes enthält:
- in Serie zwischen der Datenkreis-Abschlußvorrichtung (CAS₂) und der Austauscheinheit (UEI),
- eine Anordnung (DADI) zur dynamischen Zuordnung zeitlicher Datenkanäle (VTᵢ, VTⱼ ...) entsprechend den verschiedenen Datenkanälen der Kommunikationsverbindung,
- einen Schreib/Lese-Speicher (DAMI) mit Doppelzugriff vom Typ VIVO mit n getrennten physischen Kanälen (V₀ bis V₃₁) für das Senden und das Empfangen,
- einen Signalprozessor (PCSI), der einem programmierbaren Speicher (MMI₂) zu geordnet ist, der die Programme zum Verarbeiten der mehreren in der Verbindung S₂ enthaltenen Protokolle enthält,
- wobei die Anordnung zur dynamischen Zuordnung Daten (DR, DE) und ein Synchronisierungssignal (SYNR, SYNE) sendet und emplängt, das entweder über die Abschlußvorrichtung (CAS₂) oder über den Signalprozessor (PCSI) auf einen seriellen Datenbus geschickt wird, der m Zeitkanäle, mit m größer oder gleich n, transportiert und beim Empfang die Gruppe serieller Bits in eine Gruppe paralleler Bits transformiert, die in den Speicher mit Doppelzugrill geschickt werden (oder umgekehrt beim Senden), wobei die Anordnung die Konzentration der m Zeitkanäle auf die n physischen Kanäle des Speichers mit Doppelzugriff durch dynamische Zuordnung der m Zeitkanäle zu den n physischen Kanälen unter der Steuerung durch die Austauscheinheit (UEI) gewährleistet, wobei der Signalprozessor (PCSI) in jedem Kanal (Vₗ) des Speichers mit Doppelzugriff bei der Ankunft jedes Bits des Synchronisierungssignals (SYNR, SYNE) die Daten liest (oder schreibt), die durch die Zuordnungsanordnung (DADI) geschrieben (oder gelesen) werden, sie im Speicher abspeichert, den Zustand der Rahmen entsprechend dem Typ des für ihre Übertragung angewendeten Protokolls analysiert und daraus die Daten entnimmt, die sie anschließend zur Austauscheinheit überträgt.

2. Steuervorrichtung nach Anspruch 1, dadurch gekennzeichnet, daß die Anordnung (DADI) zur dynamischen Zuordnung eine Tabelle (TABI) enthält, in der die Korrespondenzen zwischen jedem Zeitkanal (VTᵢ, VTⱼ) und jedem physischen Kanal (Vₗ, Vₖ) des Speichers (DAMI) mit Doppelzugriff aufgeschrieben sind, wobei die Zuordnungsanordnung (DADI) zu dieser (oder von dieser) einerseits jede Gruppe paralleler (Bits, andererseits die Zahl des physischen Kanals, wo diese Gruppe geschrieben (oder gelesen) werden soll, und schließlich ein Bit, das anzeigt, ob die Gruppe in diesen physischen Kanal geschrieben (oder aus diesen physischen Kanal gelesen) werden soll, schickt (oder empfängt).

3. Steuervorrichtung nach einem der Ansprüche 1, 2, dadurch gekennzeichnet, daß jeder physische Kanal (Vₗ, Vₖ) des Speichers (DAMI) mit Doppelzugriff q Gruppen paralleler Bits enthalten kann.

4. Steuervorrichtung nach Anspruch 3, dadurch gekennzeichnet, daß sie einen Zeiger (PTI) enthält, der durch ein vom Prozessor (PCSI) ausgesendete Signal (RAZI) ausgesendete Signal auf Null gestellt wird und das Synchronisierungssignal (SYNR) empfängt, die Anzahl der empfangenen (oder gesendeten) Zeitrahmen zäblt und zum Speicher (DAMI) mit Doppelzugriff die Rangordnung q der Gruppe paralleler Bits überträgt, die durch die Anordnung (DADI) zur dynamichen Zuordnung in den physischen Kanal (Vₗ, Vₖ) geschrieben (oder daraus gelesen) wird.

5. Steuervorrichtung nach Anspruch 4, dadurch gekennzeichnet, daß der Zeiger (PTI) ein Modulo-16-Zähler ist.

6. Steuervorrichtung nach einem der Ansprüche 1, 2, 3, 4, 5, dadurch gekennzeichnet, daß sie eine Vorrichtung (DRI) zum Regeln der Datenübertragung enthält, die das Synchronisierungssignal (SYNR) empfängt, die Anzahl der von der Zuordnungsanordung empfangenen (oder gesendeten) Zeitrahmen Zählt, die durch den Signalprozessor um eine gegebene Anzahl von Einheiten jedesmal dann herabgesetzt wird, wenn eine äquivalente Anzahl von Bits durch den Signalprozessor (PCSI) in dem Speicher (DAMI) mit Doppelzugriff gelesen wird (oder in diesen geschrieben wird), und wobei eine momentane Unterbrechung aller oder eines Teils der Operationen des Signalprozessors von der Regelvorrichtung verwaltet wird, wenn ihr Inhalt einen ersten gegebenen Wert überschreitet oder kleiner als ein zweiter gegebener Wert wird, nachdem er größer als der erste gewesen ist und umgekehrt.

7. Steuervorrichtung nach Anspruch 6, dadurch gekennzeichnet, daß die Regelvorrichtung (DRI) von einem Modulo-16-Zähler gebildet ist.

## Claims

1. An ISDN multi-protocol communication controller effecting the management of least one communication link (LS₂₁ to LS₂₄), physically supported by a transmission line (LT) and comprising a specific number of data channels managed according to a plurality of protocols, between at least one computer (COMP) and a set of terminals (T₁, T₂, etc) via an automatic telephone exchange (PABX) comprising:
- an exchange unit (UE) receiving the data coming either from the computer (COMP) or from the terminals via the type S₂ link, and managing the high communication layers of the OSI model,
- a peripheral unit (UPRI) arranged between the exchange unit (UEI) and data circuit terminating equipment (CAS₂₁ to CAS₂₄), which is itself connected to the transmission line (LT), the peripheral unit (UPRI) effecting the management of communications between the computer (COMP) and the other terminals (T₁, T₂) as well as the time-division multiplexing and demultiplexing of the different data channels of the link, characterised in that the peripheral unit (UPRI) comprises:
- arranged in series between the data circuit terminating equipment (CAS₂) and the exchange unit (UEI),
- a device (DADI) for dynamically allocating the data time slots (VTᵢ, VTⱼ, etc) corresponding to the different data channels of the communication link,
- a fifo-type double access random access memory (DAMI) comprising n discrete physical paths (V₀ to V₃₁) both for transmission and for reception,
- a signal processor (PCSI) combined with a programmable memory (MMI₂) comprising programs for processing the plurality of protocols contained in the link S₂,
- the dynamic allocation device receiving or transmitting the data (DR, DE) and a synchronising signal (SYNR, SYNE) sent either by the terminal equipment (CAS₂) or by the signal processor (PCSI), on a serial data bus carrying m time slots, where m is greater than or equal to n, transforming, at reception, the sets of serial bits into sets of parallel bits sent to the double access memory (and vice versa at transmission), ensuring the concentration of m time slots onto the n physical paths of the double access memory by dynamic allocation of the m time slots to the n physical paths, under the control of the exchange unit (UEI), the signal processor (PCSI) reading (or writing), in each path (V₁) of the double access memory, upon the arrival of each bit of the synchronising signal (SYNR, SYNE), the data which is written (or read) by the allocation device (DADI), stores them in memory, analyses the status of the frames according to the type of protocol used for the transmission thereof and extracts the data which it then transmits to the exchange unit.

2. A controller according to Claim 1, characterised in that the dynamic allocation device (DADI) comprises a table (TABI) in which are written the correspondences between each time slot (VTᵢ, VTⱼ) and each physical path (V₁, Vₖ) of the double access memory (DAMI), the allocation device (DADI) sending to (or receiving from) the latter, on the one hand each set of parallel bits, on the other hand the number of the physical path in which this set must be written (or read), and finally a bit indicating whether this set must be written (or read) in this physical path.

3. A controller according to one of Claims 1, 2, characterised in that each physical path (Vₗ, Vₖ,) of the double access memory (DAMI) can contain q sets of parallel bits.

4. A controller according to Claim 3, characterised in that it comprises a pointer (PTI) which is reset by a signal (RAZI) sent by the processor (PCSI), and receiving said synchronising signal (SYNR), counting the number of time frames received (or transmitted) and sending to the double access memory (DAMI) the rank q of the set of parallel bits which is written (or read) by the dynamic allocation device (DADI) in the physical path (Vₗ, Vₖ).

5. A controller according to Claim 4, characterised in that the pointer (PTI) is constituted by a modulo 16 counter.

6. A controller according to one of Claims 1, 2, 3, 4, 5, characterised in that it comprises a data transfer regulation device (DRI) receiving the synchronising signal (SYNR), counting the number of time frames received (or transmitted) by the allocation device, decremented by the signal processor by a given number of units whenever an equivalent number of sets of bits is read (or written) by the signal processor (PCSI) in the double access memory (DAMI), and generating a brief interrupt for all or part of the operation of the signal processor when its content exceeds a first given value or becomes lower than a second given value after having been greater than the first or vice versa.

7. A controller according to Claim 6, characterised in that the regulation device (DRI) is constituted by a modulo 16 counter.
